(19) Europäisches Patentamt / European Patent Office / Office européen des brevets

(11) **EP 3 252 561 B1**

(12) **FASCICULE DE BREVET EUROPEEN**

(45) Date de publication et mention
de la délivrance du brevet:
**17.02.2021 Bulletin 2021/07**

(21) Numéro de dépôt: **17172492.5**

(22) Date de dépôt: **23.05.2017**

(51) Int Cl.:
*G05D 1/00* *(2006.01)*      *G05D 17/02* *(2006.01)*
*B60T 8/17* *(2006.01)*      *B64C 13/00* *(2006.01)*
*B64C 25/40* *(2006.01)*

(54) **PROCEDE DE COMMANDE D'UN SYSTEME DE TAXIAGE ELECTRIQUE**

STEUERVERFAHREN EINES ELEKTRISCHEN ROLLSYSTEMS

A METHOD OF CONTROLLING AN ELECTRICAL TAXIING SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.06.2016 FR 1655042**

(43) Date de publication de la demande:
**06.12.2017 Bulletin 2017/49**

(73) Titulaire: **Safran Landing Systems
78140 Vélizy-Villacoublay (FR)**

(72) Inventeur: **GORCE, Clément
78140 Vélizy-Villacoublay (FR)**

(74) Mandataire: **Lavaud, Thomas
Cabinet Boettcher
16, rue Médéric
75017 Paris (FR)**

(56) Documents cités:
**WO-A1-2014/076485      US-A1- 2009 152 942
US-A1- 2014 156 113      US-A1- 2015 175 257
US-A1- 2016 122 007**

**Description**

L'invention concerne le domaine du taxiage ou roulage des aéronefs.

ARRIERE PLAN DE L'INVENTION

Un système de taxiage installé sur un aéronef permet de déplacer l'aéronef durant les phases de taxiage de manière autonome, c'est-à-dire en évitant l'usage des moteurs principaux de l'aéronef.

Dans un système de taxiage électrique, des roues portées par un ou plusieurs atterrisseurs sont entraînées en rotation, durant les phases de taxiage, par des actionneurs comportant des moteurs électriques.

Il est possible de prévoir d'intégrer un système de taxiage électrique sur un aéronef non équipé d'un tel système au moment de son assemblage. Il convient alors de concevoir le système de taxiage électrique de manière à limiter au maximum les modifications d'interface (notamment électriques et mécaniques) à apporter à l'aéronef.

Dans ce cas, les moteurs électriques du système de taxiage électrique sont alimentés par une source de puissance électrique préexistante (par exemple, par une source de puissance électrique de type APU pour « Auxiliary Power Unit » ou « groupe auxiliaire de puissance »).

La source de puissance électrique préexistante est initialement conçue pour alimenter, lorsque l'aéronef est au sol, d'autres systèmes électriques embarqués de l'aéronef, par exemple un système d'orientation au sol de l'aéronef et un système de freinage au sol de l'aéronef comprenant des actionneurs électrohydrauliques, un système de dégivrage, un système de restauration, etc. La source de puissance électrique préexistante est ainsi dimensionnée pour alimenter de manière optimale une charge totale égale à une charge nominale maximale.

Comme l'ensemble des systèmes électriques alimentés par la source de puissance électrique préexistante ne fonctionnent pas de manière continue au cours des phases de taxiage, la source de puissance électrique préexistante fonctionne la plupart du temps sous une charge totale inférieure à la charge nominale maximale, même lorsque le système de taxiage électrique est activé.

Cependant, lorsque la charge totale est proche de la charge nominale maximale et qu'un système électrique non utilisé jusqu'alors est activé, la charge totale devient supérieure à la charge nominale maximale, ce qui risque d'endommager la source de puissance électrique préexistante, et ce qui diminue l'efficacité d'alimentation des systèmes électriques par la source de puissance électrique préexistante.

Le document US 2016/122007 A1 décrit un procédé de commande d'un système de taxiage de l'art antérieur.

Les documents US 2009/152942 A1, US 2014/156113 A1, WO 2014/076485 A1 et US 2015/175257 A1 sont également connus.

OBJET DE L'INVENTION

Un but de l'invention est de protéger et d'améliorer l'efficacité d'une source de puissance électrique destinée à alimenter une pluralité de systèmes électriques embarqués dans un aéronef, parmi lesquels un système de taxiage électrique.

RESUME DE L'INVENTION

A cet effet, on prévoit, selon l'invention, un procédé de commande d'un système de taxiage électrique selon la revendication 1.

Le procédé de commande d'un système de taxiage électrique selon l'invention adapte donc la commande du système de taxiage électrique pour que le paramètre électrique (par exemple, une charge) représentatif de la consommation électrique de l'ensemble de systèmes électriques atteigne la valeur cible (par exemple, une charge nominale maximale). La source de puissance électrique est donc protégée et son fonctionnement est optimisé.

D'autres caractéristiques et avantages de l'invention ressortiront à la lecture de la description qui suit d'un mode de réalisation particulier non limitatif de l'invention.

BREVE DESCRIPTION DES DESSINS

Il sera fait référence aux dessins annexés, parmi lesquels :

- la figure 1 comporte un graphique sur lequel sont représentées une courbe d'une charge nominale maximale et une courbe d'une charge globale, au moment de l'activation d'un système de dégivrage, dans un premier exemple de mise en œuvre de l'invention ;
- la figure 2 est une figure analogue à la figure 1, les courbes correspondant à un deuxième exemple de mise en œuvre de l'invention ;

- la figure 3 est une figure analogue à la figure 1, au moment de la désactivation du système de dégivrage ;
- la figure 4 représente un procédé de commande d'un système de taxiage électrique selon l'invention ;
- la figure 5 représente une chaîne de traitement mise en œuvre dans le procédé de commande d'un système de taxiage électrique selon l'invention ;
- la figure 6 comporte un graphique sur lequel sont représentées une courbe d'une consigne de charge, une courbe d'une mesure de charge globale et une courbe d'une charge nominale maximum ;
- la figure 7 comporte un graphique sur lequel est représentée une courbe de gain d'un bloc proportionnel ;

- la figure 8 comporte un graphique sur lequel est représentée une courbe de gain d'un bloc intégrateur;
- la figure 9 comporte un graphique sur lequel est représentée une courbe de gain d'un bloc dérivateur.

## DESCRIPTION DETAILLEE DE L'INVENTION

Le procédé de commande d'un système de taxiage électrique selon l'invention est ici mis en œuvre sur un aéronef comportant un atterrisseur.

L'atterrisseur comprend une tige montée à coulissement dans un caisson de l'atterrisseur et portant deux roues.

Le système de taxiage électrique agit sur les deux roues de l'atterrisseur pour déplacer l'aéronef de manière autonome au cours du taxiage de l'aéronef.

Le système de taxiage électrique comporte ici un actionneur comprenant un moteur électrique, un module électrique de puissance (couramment appelé calculateur, contrôleur, électronique de puissance, etc.) et un module électrique de commande (couramment appelé calculateur, contrôleur, électronique de commande, etc.). Le module électrique de puissance et le module électrique de commande peuvent bien sûr être intégrés au sein d'une même unité électrique.

Le pilote de l'aéronef produit, au cours des phases de taxiage, un ordre de taxiage pour déplacer l'aéronef (dans une certaine direction, un certain sens, avec une certaine vitesse, une certaine accélération, etc.). Le module électrique de commande génère, à partir de l'ordre de taxiage, une commande d'effort (par exemple, une commande de couple ou de vitesse ou de force) à destination du module électrique de puissance. Le module électrique de puissance génère à partir de la commande d'effort un courant électrique de commande et le transmet au moteur électrique.

Le système de taxiage est alimenté par une source de puissance électrique, qui est ici un APU. Bien sûr, une source de puissance électrique autre que l'APU pourrait être utilisée.

D'autres systèmes électriques embarqués de l'aéronef sont eux aussi alimentés par l'APU lorsque l'aéronef est au sol (et donc, en particulier, au cours du taxiage de l'aéronef). Les autres systèmes électriques embarqués comportent un système d'orientation au sol de l'aéronef, un système de freinage au sol de l'aéronef, un système de dégivrage et un système de restauration.

L'APU alimente donc ici un ensemble de systèmes électriques comprenant, outre le système de taxiage électrique, le système d'orientation au sol, le système de freinage au sol, le système de dégivrage et le système de restauration.

L'APU était ici initialement prévu pour alimenter uniquement le système d'orientation au sol, le système de freinage au sol, le système de dégivrage et le système de restauration, de préférence sous une charge égale à une charge nominale maximale. La charge nominale maximale est la valeur de charge maximale sous laquelle l'APU fonctionne de manière nominale. Le fonctionnement de l'APU sous la charge nominale maximale correspond donc à un fonctionnement nominal « optimisé » dans lequel la puissance délivrée par l'APU est maximale.

L'intégration du système de taxiage électrique n'était pas prévue au moment de la conception de l'aéronef et de l'APU. Ainsi, lorsque le système de taxiage électrique fonctionne, il est possible, notamment si tous les autres systèmes électriques de l'ensemble de systèmes électriques fonctionnent aussi, que la charge globale vue par l'APU soit supérieure à la charge nominale maximale.

Le procédé de commande d'un système de taxiage électrique selon l'invention (appelé « procédé de commande » dans la suite de cette description), mis en œuvre dans le module électrique de commande évoqué plus tôt, remplit une fonction de protection de l'APU et une fonction d'optimisation de l'APU. La fonction de protection a pour but de protéger l'APU en évitant que la charge globale ne soit supérieure pendant une durée significative à la charge nominale maximale. La fonction d'optimisation a pour but de faire en sorte que la charge globale, si elle est inférieure à la charge nominale maximale, atteigne la charge nominale maximale pour optimiser l'utilisation de l'APU.

Le système de taxiage électrique est à cet effet considéré ici, en ce qui concerne l'utilisation de l'APU, comme le système électrique de plus basse priorité de l'ensemble de systèmes électriques.

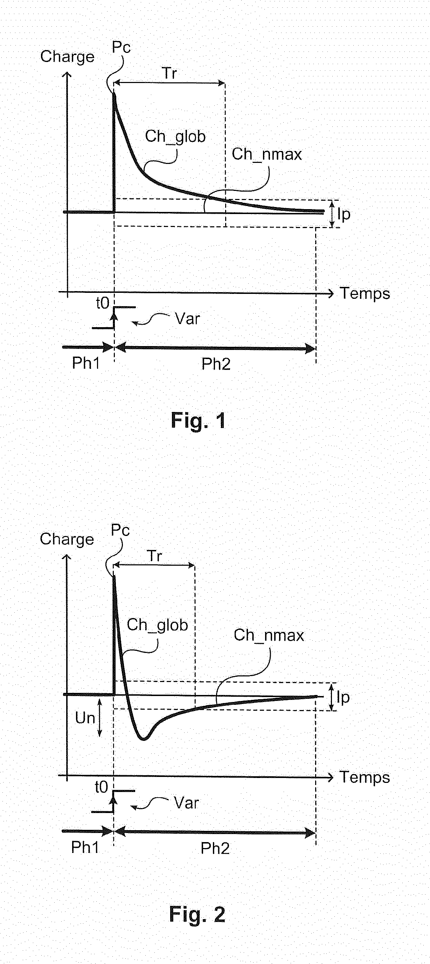

On illustre tout d'abord la mise en œuvre de la fonction de protection en référence aux figures 1 et 2.

On considère, au cours du taxiage de l'aéronef, une première phase de fonctionnement Ph1 de l'ensemble de systèmes électriques durant laquelle la charge globale Ch_glob vue par l'APU est égale à la charge nominale maximale Ch_nmax. Au cours de la première phase de fonctionnement Ph1, le système de taxiage électrique est activé, mais au moins l'un des systèmes électriques de l'ensemble de systèmes électriques est au repos, par exemple le système de dégivrage.

Une deuxième phase de fonctionnement Ph2 débute lors de l'activation, au temps t0, du système de dégivrage. Cette activation est symbolisée, sur les figures 1 et 2, par le passage d'un état bas à un état haut d'une variable Var représentative de l'activation ou de la désactivation du système de dégivrage. Le système de taxiage électrique, lui, est toujours activé pendant la deuxième phase de fonctionnement Ph2.

Lorsque le système de dégivrage est activé, la charge globale Ch_glob vue par l'APU augmente et devient nettement supérieure à la charge nominale maximale Ch_nmax. Il convient donc de protéger l'APU.

Le procédé de commande produit une commande d'effort optimisée qui réduit la charge de taxiage correspondant au système de taxiage au moment t0, de manière à ce que la charge globale Ch_glob vue par l'APU diminue pour atteindre à nouveau la charge nominale maximum Ch_nmax.

Dans un premier exemple de mise en œuvre de l'invention visible sur la figure 1, la charge globale Ch_glob augmente brusquement au moment t0 jusqu'à atteindre un pic de charge Pc du fait de l'activation du système de dégivrage, et diminue rapidement grâce à la mise en œuvre du procédé de commande au temps t0. La charge nominale maximale Ch nmax est atteinte après un temps de réponse Tr du procédé de commande. Par « atteinte », on entend que la différence entre la charge globale Ch_glob et la charge nominale maximale Ch_nmax est comprise dans un intervalle de précision Ip prédéterminé représentant la précision du procédé de commande.

Il convient bien sûr de limiter autant que possible la durée au cours de laquelle la charge globale est supérieure à la charge nominale maximale Ch_nmax, et donc le temps de réponse Tr.

Pour réduire cette durée, il est avantageux que le profil de la charge globale Ch_glob soit semblable à celui obtenu dans le deuxième exemple de mise en œuvre de l'invention visible sur la figure 2.

On voit que la charge globale Ch_glob de la figure 2 diminue rapidement pour devenir inférieure à la charge nominale maximale Ch_nmax, puis tend vers la charge nominale maximale Ch_nmax.

La charge globale Ch_glob présente un *undershoot* (ou « valeur de dépassement inférieur », en français) relativement important. *L'undershoot* est ici défini comme étant la valeur maximale de la différence entre la charge nominale maximale Ch_nmax et la charge globale Ch_glob, en phase transitoire, lorsque la charge globale Ch_glob est inférieure à la charge nominale maximale Ch_nmax.

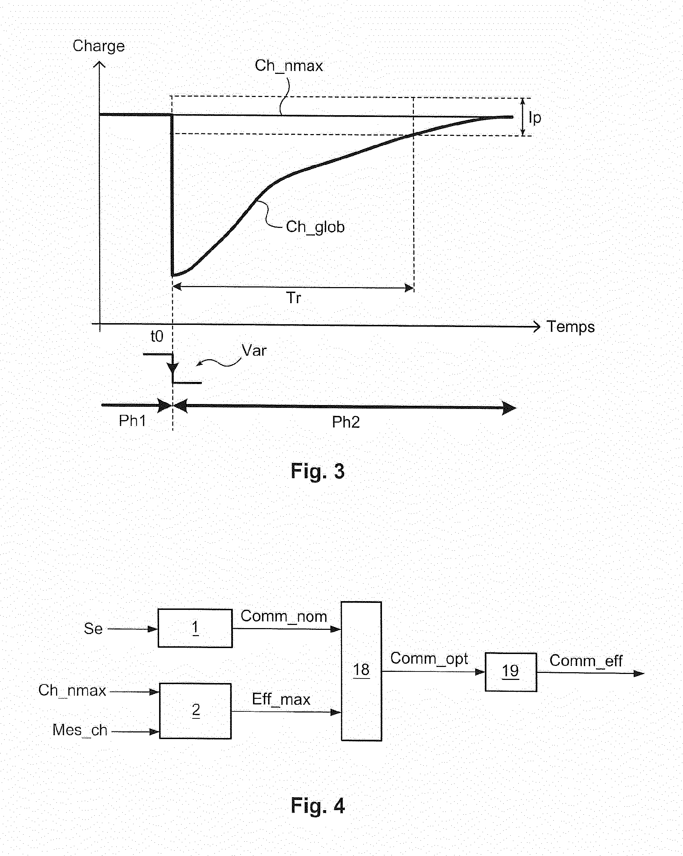

On illustre ensuite la mise en œuvre de la fonction d'optimisation en référence à la figure 3.

On considère, au cours du taxiage de l'aéronef, une première phase de fonctionnement Ph1 de l'ensemble de systèmes électriques durant laquelle la charge globale Ch_glob vue par l'APU est égale à la charge nominale maximale Ch_nmax. Au cours de la première phase de fonctionnement Ph1, le système de dégivrage et le système de taxiage électrique sont activés.

Une deuxième phase de fonctionnement Ph2 débute lors de la désactivation, au temps t0, du système de dégivrage. Cette désactivation est symbolisée, sur la figure 3, par le passage d'un état haut à un état bas de la variable Var. Le système de taxiage électrique, lui, est toujours activé pendant la deuxième phase de fonctionnement Ph2.

Le procédé de commande vise à produire une commande d'effort optimisée qui augmente la charge de taxiage représentée par le système de taxiage au moment t0, de sorte que la charge globale Ch_glob vue par l'APU atteigne la charge nominale maximale Ch_nmax. Les performances du taxiage sont ainsi améliorées (en matière de vitesse, d'accélération, de couple moteur, etc.), et la valeur de charge globale vue par l'APU permet à celui-ci de fonctionner de manière optimale.

On note qu'il est préférable que le temps de réponse Tr soit plus important que celui obtenu lors de la mise en œuvre de la fonction de protection (voir figures 1 et 2). En effet, dans le cas présent, un temps de réponse Tr trop rapide conduirait à un *overshoot* (ou « valeur de dépassement supérieur », en français) important de la charge globale. *L'overshoot* est ici défini comme étant la valeur maximale de la différence entre la charge globale Ch_glob et la charge nominale maximale Ch_nmax, en phase transitoire, lorsque la charge globale Ch_glob est supérieure à la charge nominale maximale Ch_nmax.

On décrit maintenant plus en détail, en référence à la figure 4, la mise en œuvre du procédé de commande.

Le procédé de commande comporte tout d'abord la mise en œuvre d'un bloc de commande d'effort nominale 1. Le bloc de commande d'effort nominale 1 reçoit des signaux d'entrée Se produits à partir de l'ordre de taxiage généré par le pilote de l'aéronef. Le bloc de commande d'effort nominale 1 génère une commande d'effort nominale Comm_nom en fonction des signaux d'entrée Se. La commande d'effort nominale Comm_nom est destinée à piloter le moteur électrique de l'actionneur du système de taxiage électrique.

La commande d'effort nominale Comm_nom générée par le bloc de commande d'effort nominale 1 est une commande d'effort classique, telle que générée par un procédé de commande d'un système de taxiage de l'art antérieur. Le bloc de commande d'effort nominale 1 n'est donc pas décrit ici plus en détail.

Le procédé de commande comporte de plus la mise en œuvre d'une chaîne de traitement 2 parallèlement à la mise en œuvre du bloc de commande d'effort nominale 1.

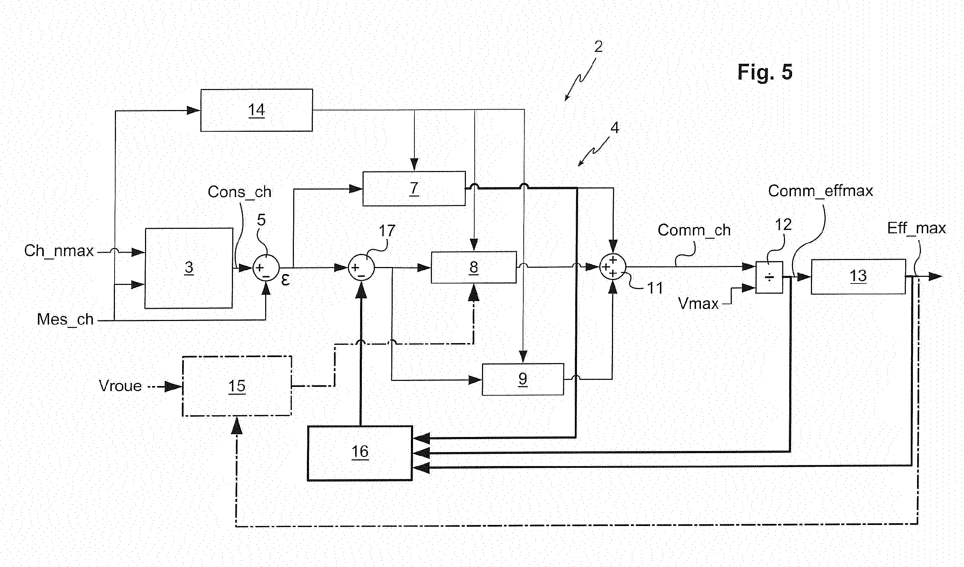

La chaîne de traitement 2 est visible sur la figure 5 de manière plus détaillée.

La chaîne de traitement 2 a pour but de produire un effort de commande maximum Eff max du système électrique de taxiage pour qu'une valeur réelle de la charge globale réelle de l'APU atteigne la charge nominale maximale Ch_nmax.

Les entrées de la chaîne de traitement 2 comprennent la charge nominale maximale Ch_nmax, une mesure de la charge globale Mes_ch, et une vitesse des roues Vroues entraînées par le système de taxiage électrique.

La chaîne de traitement 2 comporte un bloc de traitement de consigne 3 qui produit, à partir de la charge nominale maximale Ch_nmax et de la mesure de la charge globale Mes_ch, une consigne de charge Cons_ch.

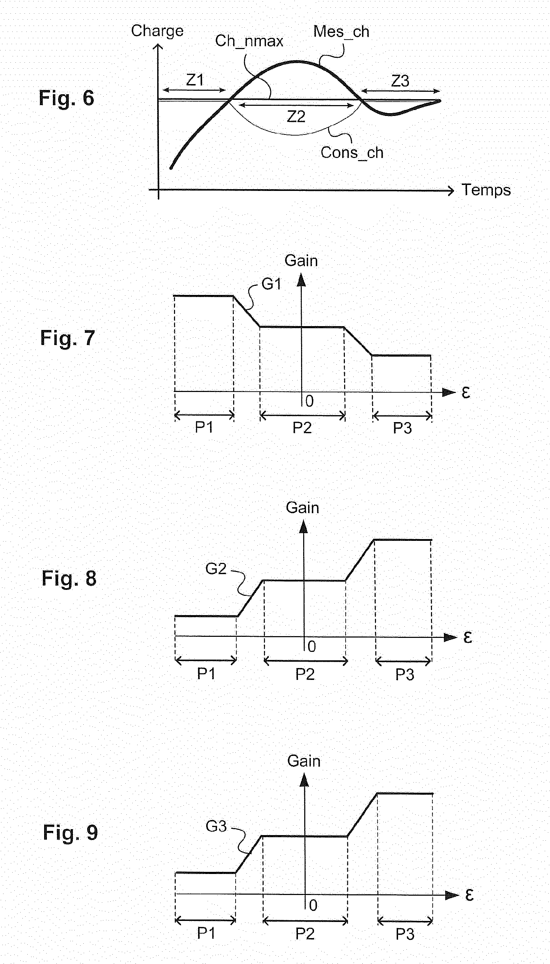

En référence à la figure 6, qui illustre par un exemple la mise en œuvre du bloc de traitement de consigne 3, la consigne de charge Cons_ch est égale à la charge nominale maximale Ch_nmax lorsque la mesure de la charge globale Mes_ch présente un *overshoot* inférieur à un seuil *d'overshoot* prédéterminé (zones Z1 et Z3), et la consigne de charge Cons_ch est égale à la charge nominale maximale Ch_nmax de laquelle est retranchée *l'overshoot* lorsque la mesure de la charge globale Mes_ch présente un *overshoot* supérieur au seuil *d'overshoot* prédéterminé (zone Z2) . Ici, le seuil prédéterminé est nul, mais il pourrait bien sûr avoir une valeur différente.

La chaîne de traitement 2 comporte de plus une boucle de régulation 4.

La boucle de régulation 4 a pour consigne la consigne de charge Cons_ch.

La boucle de régulation 4 comporte un premier soustracteur 5 qui retranche à la consigne de charge Cons_ch la mesure de la charge globale Mes_ch pour produire une erreur ε de la boucle de régulation 4.

La boucle de régulation 4 comporte de plus un régulateur proportionnel, intégral, dérivé comprenant un bloc proportionnel 7, un bloc intégrateur 8 et un bloc dérivateur 9.

La courbe de gain G1 du bloc proportionnel 7, visible sur la figure 7, la courbe de gain G2 du bloc intégrateur 8, visible sur la figure 8, et la courbe de gain G3 du bloc dérivateur 9, visible sur la figure 9, présentent chacune trois portions selon les valeurs de l'erreur ε : une première portion P1 correspondant à une erreur ε négative et de valeur absolue importante, une deuxième portion P2 correspondant à une erreur ε faible (correspondant à l'intervalle de précision Ip évoqué plus tôt), et une troisième portion P3 correspondant à une erreur ε positive et importante.

Sur chaque courbe de gain G1, G2, G3, la première portion P1 correspond à un premier gain constant, la deuxième portion P2 correspond à un deuxième gain constant, et la troisième portion P3 correspond à un troisième gain constant.

Le bloc proportionnel 7 présente un premier gain élevé, un deuxième gain moyen, et un troisième gain faible.

La première portion correspond en effet à une erreur ε importante (équivalente à un *overshoot*) qu'il convient de corriger rapidement, grâce au premier gain élevé, pour protéger l'APU d'une charge globale trop importante.

Le deuxième gain moyen permet à la boucle de régulation 4 d'être robuste à de faibles perturbations lorsque l'erreur ε est faible (dans l'intervalle de précision Ip).

Le troisième gain faible permet d'éviter un *overshoot* au cours de la mise en œuvre de la fonction d'optimisation.

On note que le bloc proportionnel 7 est conçu uniquement par rapport aux systèmes électriques de l'ensemble de systèmes électriques ne comprenant pas le système de taxiage électrique. La forme générale de la charge globale de l'ensemble de systèmes électriques complet (c'est-à-dire incluant le système de taxiage électrique) est quant à elle définie à la fois par le bloc proportionnel 7 et par la consigne de charge Cons_ch.

Le bloc intégrateur 8 présente quant à lui un premier gain faible, un deuxième gain moyen, et un troisième gain élevé.

Lorsque la boucle de régulation 4 est stabilisée, la sortie du bloc intégrateur 8 prend, avec une transition progressive, la valeur de la charge nominale maximale Ch_nmax à laquelle est retranchée la charge de l'ensemble de systèmes électriques (à l'exception du système de taxiage électrique).

Le bloc dérivateur 9 présente lui aussi un premier gain faible, un deuxième gain moyen, et un troisième gain élevé.

Le bloc dérivateur 9 permet d'améliorer la stabilité de la boucle de régulation 4 vis-à-vis du réglage du correcteur proportionnel, intégrateur équivalent à la combinaison du bloc proportionnel 7 et du bloc intégrateur 8, et d'éviter autant que possible la survenue d'*overshoots*.

La boucle de régulation 4 comporte de plus un sommateur 11 qui additionne la sortie du bloc proportionnel 7, la sortie du bloc intégrateur 8 et la sortie du bloc dérivateur 9 pour produire une commande de charge Comm_ch en sortie de la boucle de régulation 4.

La chaîne de traitement 2 comporte de plus un bloc diviseur 12. Le bloc diviseur 12 transforme la commande de charge Comm_ch en une commande d'effort maximum Comm_effmax, selon la formule suivante :

$$\text{Comm\_chm = Vmax* Comm\_effmax,}$$

où Vmax est une vitesse maximale des roues entraînées en rotation par le système de taxiage électrique.

Ainsi, une même augmentation de la commande de charge Comm_ch conduit à une diminution de la commande d'effort maximum Comm_effmax moins importante à haute vitesse qu'à basse vitesse.

Alors que le régulateur proportionnel, intégral, dérivé permet d'obtenir un bon comportement dynamique de la chaîne de traitement 2, le bloc diviseur 12 permet d'obtenir un bon comportement dynamique sur la commande d'effort maximum Comm_effmax.

La chaîne de traitement 2 comporte de plus un bloc de limitation de pente 13 qui permet de limiter les variations de la commande d'effort maximum Comm_effmax. Le bloc de limitation de pente 13 permet d'adapter la sortie de la chaîne de traitement 2, dont le temps de réponse est très rapide, à la dynamique beaucoup plus lente du taxiage de l'aéronef.

La chaîne de traitement 2 comporte de plus un bloc d'activation 14, qui reçoit la mesure de la charge globale Mes_ch et qui active la chaîne de traitement 2 lorsque la mesure de la charge globale Mes_ch est au-dessus d'un seuil de charge prédéterminé. Le seuil de charge prédéterminé est défini en fonction d'une moyenne de la charge de taxiage.

Ainsi, par exemple, si la charge nominale maximale Ch nmax est égale à 100 et que la moyenne de la charge de taxiage est égale à 30, le seuil de charge prédéterminé est égal à 100-30 = 70.

Lorsque la chaîne de traitement 2 est activée, le bloc intégrateur 8 est initialisé avec la charge de taxiage actuelle de manière à ce que la sortie du bloc intégrateur 8 soit la plus proche possible de sa valeur stabilisée, pour éviter de générer un *overshoot* sur la charge globale vue par l'APU.

La chaîne de traitement 2 comporte aussi un bloc d'estimation de charge de taxiage 15, qui reçoit une mesure de vitesse des roues Vroue entraînées en rotation par le système de taxiage électrique, ainsi que l'effort de commande maximum Eff max en sortie de la chaîne de traitement 2. Le bloc d'estimation de charge de taxiage 15 met en œuvre une équation mécanique utilisant la mesure de vitesse des roues Vroue et l'effort de commande maximum Eff_max pour initialiser le bloc intégrateur 8.

La chaîne de traitement 2 comporte enfin un bloc d'anti-emballement 16 qui met en œuvre une fonction d'anti-emballement (fonction communément désignée par le terme anglais « anti wind-up »). Le bloc d'anti-emballement 16 produit, à un temps tn donné, une charge non saturée égale à une différence entre la commande d'effort maximum Comm_effmax et l'effort de commande maximum Eff_max produit au temps tn-1 par la chaîne de traitement 2.

Le bloc d'anti-emballement 16 utilise les valeurs de la courbe de gain G1 du bloc proportionnel 7 ainsi que la division réalisée par le bloc diviseur 12 pour réaliser l'anti-emballement. Le bloc d'anti-emballement 16 utilise si nécessaire un ou des coefficients de pondération. Le bloc d'anti-emballement 16 réalise un traitement par rétroaction, qui permet de conserver les valeurs en sortie du bloc intégrateur 8 et en sortie du bloc dérivateur 9 à l'extérieur de zones de saturation. L'utilisation du bloc d'anti-emballement 16 permet donc à la chaîne de traitement 2 de conserver une bonne réactivité en évitant d'utiliser des filtres pour aboutir à un résultat similaire, lesdits filtres possédant des coefficients dont la mise à jour en temps réel entraînerait d'importantes pertes de temps.

En référence de nouveau à la figure 4, le procédé de commande comporte de plus la mise en œuvre d'un bloc de choix d'effort minimum 18 qui génère une commande d'effort optimisée Comm_opt du système de taxiage en choisissant le minimum entre la commande d'effort nominale Comm_nom et l'effort de commande maximum Eff max.

Le bloc de choix d'effort minimum 18 choisit le minimum en valeur absolue entre la commande d'effort nominale Comm_nom et l'effort de commande maximum Eff_max et conserve le signe de la commande d'effort nominale Comm_nom si celle-ci est choisie ou de l'effort de commande maximum Eff max si celui-ci est choisi.

Le procédé de commande comporte de plus la mise en œuvre d'un bloc de gestion d'effort 19 qui transforme la commande d'effort optimisée Comm_opt en une commande d'effort effective Comm_eff qui est utilisée pour piloter le moteur électrique.

Le bloc de gestion d'effort 19 réalise si nécessaire des limitations (saturation, limitation de pente, etc.), des ajustements pour rendre la commande d'effort effective Comm_eff conforme à des normes utilisées (signe, unité, etc.), ou bien la mise en œuvre d'une commutation entre plusieurs procédé de commande. Bien sûr, il est possible que le bloc de gestion d'effort 19 ne réalise aucune opération, et donc que la commande d'effort optimisée Comm_opt soit égale à la commande d'effort effective Comm_eff.

Bien entendu, l'invention n'est pas limitée au mode de réalisation décrit mais englobe toute variante entrant dans le champ de l'invention telle que définie par les revendications.

Bien que l'on ait défini une chaîne de traitement destinée à produire un effort de commande maximum du système électrique de taxiage permettant à la charge globale vue par l'APU d'atteindre une charge nominale maximale, il aurait été possible de définir, à la place de la charge nominale maximale, une autre valeur cible (une charge nominale quelconque par exemple).

L'invention peut par ailleurs être mise en œuvre avec un paramètre électrique autre que la charge et représentatif de la consommation électrique d'un ensemble de systèmes électriques, par exemple avec un courant consommé par l'ensemble de systèmes électriques, une tension en entrée de l'ensemble de systèmes électriques, une puissance ou une énergie consommées, etc.

## Revendications

1. Procédé de commande d'un système de taxiage électrique comportant un actionneur comprenant un moteur électrique adapté à déplacer un aéronef au cours du taxiage de l'aéronef, le procédé comprenant les étapes de :

- définir une valeur cible (Ch_nmax) d'un paramètre électrique représentatif d'une consommation électrique d'un ensemble de systèmes électriques alimenté par une même source de puissance électrique et comprenant le système de taxiage électrique ;
- générer une commande d'effort nominale (Comm_nom) du système de taxiage électrique ;

le procédé **caractérisé en ce qu'**il comprend les étapes de :

- mettre en œuvre, parallèlement à la génération de la commande d'effort nominale (Comm _nom), une chaîne de traitement (2) destinée à produire un effort de commande maximum (Eff_max) du système de taxiage électrique pour qu'une valeur réelle du paramètre électrique atteigne la valeur cible (Ch _nmax), la chaîne de traitement (2) comprenant une boucle de régulation (4) ayant une consigne (Cons_ch) définie à partir de la valeur cible (Ch_nmax) et ayant une commande (Comm_ch) à partir de laquelle est défini l'effort de commande maximum (Eff_max) ;
- générer une commande d'effort optimisée (Comm_opt) du système de taxiage électrique égale au minimum entre la commande d'effort nominale et l'effort de commande maximum ;
- transformer la commande d'effort optimisée (Comm_opt) en une commande d'effort effective (Comm_eff) qui est utilisée pour piloter le moteur électrique.

**2.** Procédé de commande selon la revendication 1, dans lequel le paramètre électrique est une charge globale (Ch_glob) de l'ensemble de systèmes électriques.

**3.** Procédé de commande selon la revendication 1, dans lequel la consigne (Cons_ch) est égale à la valeur cible (Ch_nmax) lorsqu'une valeur mesurée (Mes_ ch) du paramètre électrique présente un *overshoot* inférieur à un seuil *d'overshoot* prédéterminé, et dans lequel la consigne est égale à la valeur cible à laquelle est retranchée l'*overshoot* lorsque la valeur mesurée présente un *overshoot* supérieur ou égal au seuil *d'overshoot* prédéterminé.

**4.** Procédé de commande selon la revendication 1, dans lequel la boucle de régulation (4) comporte un régulateur proportionnel, intégral, dérivé comprenant un bloc proportionnel (7), un bloc intégrateur (8) et un bloc dérivateur (9).

**5.** Procédé de commande selon la revendication 4, dans lequel les courbes de gain du bloc proportionnel (7), du bloc intégrateur (8) et du bloc dérivateur (9) présentent chacune trois portions dépendant de valeurs d'une erreur (ε) de la boucle de régulation (4)

**6.** Procédé de commande selon la revendication 1, dans lequel la chaîne de traitement (2) comporte un bloc diviseur (12) qui divise la commande (Comm_ch) de la boucle de régulation (4) par une vitesse de roue pour obtenir l'effort de commande maximum (Eff_max).

**7.** Procédé de commande selon la revendication 1, dans lequel la valeur cible est une valeur nominale maximale.

**Patentansprüche**

**1.** Verfahren zum Steuern eines elektrischen Rollsystems, das einen Aktor umfasst, der einen Elektromotor enthält, der dazu geeignet ist, ein Luftfahrzeug während des Rollens des Luftfahrzeugs zu bewegen, wobei das Verfahren die Schritte umfasst:

- Definieren eines Zielwerts (Ch_nmax) eines elektrischen Parameters, der repräsentativ für einen Stromverbrauch einer Gruppe von elektrischen Systemen ist, die von einer selben Stromquelle gespeist wird und das elektrische Rollsystem umfasst;
- Erzeugen eines Nennkraftbefehls (Comm_nom) des elektrischen Rollsystems;

wobei das Verfahren **dadurch gekennzeichnet ist, dass** es die Schritte umfasst:

- Ausführen, parallel zur Erzeugung des Nennkraftbefehls (Comm_nom), einer Verarbeitungskette (2), die dazu bestimmt ist, eine maximale Steuerkraft (Eff_max) des elektrischen Rollsystems zu erzeugen, damit ein Istwert des elektrischen Parameters den Zielwert (Ch_nmax) erreicht, wobei die Verarbeitungskette (2) eine Regelschleife (4) umfasst, die einen Sollwert (Cons_ch) hat, der anhand des Zielwerts (Ch_nmax) definiert ist, sowie einen Befehl (Comm_ch), anhand dessen die maximale Steuerkraft (Eff_max) definiert ist;
- Erzeugen eines optimierten Kraftbefehls (Comm_opt) des elektrischen Rollsystems, der gleich dem Minimum zwischen dem Nennkraftbefehl und der maximalen Steuerkraft ist;
- Umwandeln des optimierten Kraftbefehls (Comm_opt) in einen effektiven Kraftbefehl (Comm_eff), der verwendet wird, um den Elektromotor zu steuern.

**2.** Steuerverfahren nach Anspruch 1, bei dem der elektrische Parameter eine Gesamtlast (Ch_glob) der Gruppe von elektrischen Systemen ist.

**3.** Steuerverfahren nach Anspruch 1, bei dem der Sollwert (Cons_ch) gleich dem Zielwert (Ch_nmax) ist, wenn ein Messwert (Mes_ch) des elektrischen Parameters eine Überschreitung aufweist, die kleiner als ein vorbestimmter Überschreitungsschwellenwert ist, und bei dem der Sollwert gleich dem Zielwert minus der Überschreitung ist, wenn der Messwert eine Überschreitung aufweist, die größer oder gleich dem vorbestimmten Überschreitungsschwellenwert ist.

**4.** Steuerverfahren nach Anspruch 1, bei dem die Regelschleife (4) einen Proportional-Integral-Differential-Regler umfasst, der einen Proportional-Block (7), einen Integral-Block (8) und einen Differential-Block (9) umfasst.

5. Steuerverfahren nach Anspruch 4, bei dem die Verstärkungskurven des Proportional-Blocks (7), des Integral-Blocks (8) und des Differential-Blocks (9) jeweils drei Abschnitte aufweisen, die von Werten eines Fehlers ($\varepsilon$) der Regelschleife (4) abhängen.

6. Steuerverfahren nach Anspruch 1, bei dem die Verarbeitungskette (2) einen Teiler-Block (12) umfasst, der den Befehl (Comm_ch) der Regelschleife (4) durch eine Radgeschwindigkeit teilt, um die maximale Steuerkraft (Eff_max) zu erhalten.

7. Steuerverfahren nach Anspruch 1, bei dem der Zielwert ein maximaler Nennwert ist.

**Claims**

1. A method of controlling an electrical taxiing system comprising an actuator comprising an electric motor for moving an aircraft while the aircraft is taxiing, the method comprising the steps of:

> • defining a target value (Ld_nmax) for an electrical parameter representative of the electricity consumption of a set of electrical systems powered by a common electrical power supply and including the electrical taxiing system;
> • generating a nominal force command (Cmd_nom) for the electrical taxiing system;

the method being **characterized in that** it comprises the steps of :

> • in parallel with generating the nominal force command (Cmd_nom), using a processing system (2) to produce a maximum command force (Force_max) for the electrical taxiing system so that a real value of the electrical parameter reaches the target value (Ld_nmax), the processing system (2) comprising a regulator loop (4) having a setpoint (Ld_set) defined from the target value (Ld_nmax) and having a command (Cmd_ld) from which the maximum command force (Force_max) is defined; and
> • generating an optimized force command (Cmd_opt) for the electrical taxiing system equal to the smaller of the nominal force command and the maximum command force,
> • transforming the optimized force command (Cmd_opt) into an actual force command (Cmd_act) that is used for controlling the electric motor.

2. A control method according to claim 1, wherein the electrical parameter is a global load (Ld_glob) for the set of electrical systems.

3. A control method according to claim 1, wherein the setpoint (Ld_set) is equal to the target value (Ld_nmax) when a measured value (Mes_ld) of the electrical parameter presents overshoot less than a predetermined overshoot threshold, and wherein the setpoint is equal to the target value minus the overshoot when the measured value presents an overshoot greater than or equal to the predetermined overshoot threshold.

4. A control method according to claim 1, wherein the regulator loop (4) includes a proportional, integral, and derivative regulator having a proportional block (7), an integral block (8), and a derivative block (9).

5. A control method according to claim 4, wherein the gain curves for the proportional block (7), the integral block (8), and the derivative (9) all present three respective portions depending on values of an error ($\varepsilon$) of the regulator loop (4).

6. A control method according to claim 1, wherein the processing system (2) includes a divider block (12) that divides the command (Cmd_ld) of the regulator loop (4) by a wheel speed in order to obtain the maximum command force (Force_max).

7. A control method according to claim 1, wherein the target value is a maximum nominal value.

**Fig. 1**

**Fig. 2**

**Fig. 3**

**Fig. 4**

Fig. 5

Fig. 6

Fig. 7

Fig. 8

Fig. 9

**EP 3 252 561 B1**

## RÉFÉRENCES CITÉES DANS LA DESCRIPTION

**Documents brevets cités dans la description**

- US 2016122007 A1
- US 2009152942 A1
- US 2014156113 A1
- WO 2014076485 A1
- US 2015175257 A1